# EUROPÄISCHE PATENTANMELDUNG

(11) **EP 3 147 104 A1**
(43) Veröffentlichungstag der Anmeldung: **29.03.2017**
(21) Anmeldenummer: 16190691.2
(22) Anmeldetag: 26.09.2016
(51) Int. Cl.: B29C 65/34, F16L 47/03, B29L 23/00

(54) **VERWENDUNG EINES MIT EINER ISOLATIONSSCHICHT VERSEHENEN WIDERSTANDSDRAHTS FÜR EINE ELEKTROSCHWEISSMUFFE**

(30) Priorität: 25.09.2015 DE 102015116313
(71) Anmelder: Berkenhoff GmbH, 35452 Heuchelheim (DE)
(72) Erfinder: Barthel, Bernd, 35745 Herborn (DE); Gertler, Martin, 35764 Sinn (DE); Rühl, Alexander, 35625 Hüttenberg-Reiskirchen (DE)
(74) Vertreter: Uexküll & Stolberg

(57) **Zusammenfassung**

Die vorliegende Erfindung bezieht sich auf die Verwendung eines mit einer elektrisch isolierenden Isolationsschicht (9) versehenen Widerstandsdrahts (6) für eine Elektroschweißmuffe (1). Die Elektroschweißmuffe (1) weist eine Komponente (2) aus einem thermoplastischen Material auf, und der Widerstandsdraht (6) ist angeordnet, um die Komponente (2) im Einsatz durch Stromfluss durch den Widerstandsdraht (6) zumindest teilweise zu schmelzen. Die Durchschlagsspannung der Isolationsschicht (9) bei Raumtemperatur beträgt 50 bis 1000 V.

## Beschreibung

Die vorliegende Erfindung betrifft die Verwendung eines mit einer elektrisch isolierenden Isolationsschicht versehenen Widerstandsdrahts für eine Elektroschweißmuffe.

In vielen Bereichen der Technik ist es erforderlich, zum Aufbau von Rohrleitungen einzelne Rohrabschnitte dauerhaft und fluiddicht, d.h. flüssigkeits- und gasdicht, miteinander zu verbinden. Wenn die Rohrabschnitte aus einem thermoplastischen Kunststoffmaterial ausgebildet sind oder ein thermoplastisches Kunststoffmaterial aufweisen, können sie beispielsweise miteinander verschweißt werden.

Eine Möglichkeit, einen solchen Schweißvorgang durchzuführen, besteht in der Verwendung einer Elektroschweißmuffe. Elektroschweißmuffen weisen einen rohrförmigen bzw. hohlzylindrischen Muffenkörper mit einem länglichen Hohlraum auf, der beispielsweise einen kreisförmigen, ovalen, quadratischen oder rechteckigen Querschnitt haben kann. Der Muffenkörper, der somit eine rohrförmige Komponente ist, ist vollständig oder zumindest in dem Bereich der den Hohlraum begrenzenden Wandung aus einem thermoplastischen Kunststoffmaterial ausgebildet und weist an zwei entlang einer Längsachse des Hohlraums gegenüberliegenden Enden jeweils eine Öffnung auf, durch die ein Ende eines Rohrabschnitts in den Hohlraum eingeschoben werden kann. Der Muffenkörper und die Rohrabschnitte können dabei bevorzugt aus dem gleichen Material ausgebildet sein. Ferner weist die Elektroschweißmuffe mindestens einen elektrisch leitenden Widerstandsdraht bzw. Heizdraht auf, der wendelförmig bzw. helixförmig entlang zumindest eines Teils der Länge des Hohlraums verläuft. Mit anderen Worten erstreckt sich die Längsrichtung der Wendel bzw. Helix entlang der Längsachse des Hohlraums, und der Widerstandsdraht weist eine Vielzahl von Windungen auf, die um Längsachse des Hohlraums verlaufen. Der Widerstandsdraht ist dabei an dem Muffenkörper und insbesondere an dessen thermoplastischem Material befestigt. Dazu kann er zum Beispiel an einer den Hohlraum begrenzenden Innenfläche befestigt sein. Es ist jedoch bevorzugt, wenn der Widerstandsdraht in dem thermoplastischen Material des Muffenkörpers eingebettet ist.

Zum Verschweißen zweier Rohrabschnitte aus thermoplastischem Material wird jeweils ein axialer Endabschnitt von jedem der beiden Rohrabschnitte durch jeweils eine der Öffnungen aus gegenüberliegenden Richtungen entlang der Längsachse des Hohlraums in diesen eingeschoben. Dabei sollte die Elektroschweißmuffe bevorzugt so gewählt werden, dass die Rohrabschnitte mit einer Außenwandung vollumfänglich an der den Hohlraum begrenzenden Innenwandung des Muffenkörpers anliegen. Anschließend wird der Widerstandsdraht mit Hilfe einer externen Stromquelle mit einem elektrischen Strom beaufschlagt, um den Widerstandsdraht durch den Stromfluss zu erwärmen. Dadurch werden das thermoplastische Material des Muffenkörpers und das thermoplastische Material der Endabschnitte der Rohrabschnitte erwärmt und zumindest teilweise erweicht bzw. aufgeschmolzen, so dass jeweils eine stoffschlüssige Schweißverbindung zwischen den Endabschnitten und dem Muffenkörper hergestellt wird. Im Ergebnis bilden die beiden Rohrabschnitte zusammen mit dem Muffenkörper einen durchgehenden Rohrabschnitt. Es ist selbstverständliche auch möglich, die Endabschnitte zweier anderer länglicher, nicht rohrförmiger Elemente in derselben Weise zu verschweißen.

Für die Funktionsfähigkeit der Elektroschweißmuffe ist es von Bedeutung, dass der Strom den Widerstandsdraht entlang seiner gesamten Länge durchfließt, weil ansonsten der Muffenkörper nicht im gesamten Bereich des Widerstandsdrahtes erweicht bzw. aufgeschmolzen wird und sich die wirksame Heizlänge, der Widerstand und die Heizleistung des Widerstandsdrahtes in unvorhersehbarer Weise ändern würde. Da der Widerstandsdraht üblicherweise so angeordnet ist, dass benachbarte Windungen eng voneinander beabstandet sind, und da sich der Widerstandsdraht selbst bei größerer Beabstandung der Windungen nach dem Erweichen bzw. Aufschmelzen des thermoplastischen Materials u.a. aufgrund der thermischen Längenausdehnung so verlagern kann, dass sich benachbarte Windungen berühren und einen Teilabschnitt des Widerstandsdrahtes durch Kurzschluss überbrücken, muss der Widerstandsdraht mit einer elektrisch isolierenden Isolationsschicht, d.h. einer Beschichtung oder Ummantelung aus einem elektrisch isolierenden Material, versehen sein bzw. diese aufweisen. Diese muss ihre elektrisch isolierenden Eigenschaften für ausreichend lange Zeiträume während des Schweißvorgangs beibehalten. Typischerweise müssen die Isolationsschichten bei einer Temperatur von 250 °C ihre elektrisch isolierenden Eigenschaften für mindestens zwei Minuten und bevorzugt während Schweißvorgängen bei dieser Temperatur mit einer Länge von zwei bis 15 Minuten und mehr bevorzugt zwei bis zehn Minuten aufrecht erhalten.

Vor diesem Hintergrund werden die Eigenschaften von Elektroschweißmuffen entscheidend durch die Eigenschaften des verwendeten Widerstandsdrahtes sowie dessen Isolationsschicht beeinflusst.

Es ist daher eine Aufgabe der vorliegenden Erfindung, eine Verbesserung in Bezug auf die Verwendung von Widerstandsdraht für Elektroschweißmuffen bereit zu stellen.

Nach der vorliegenden Erfindung ist vorgesehen, einen mit einer elektrisch isolierenden Isolationsschicht - d.h. einer Beschichtung oder Ummantelung aus einem elektrisch isolierenden Material - versehenen elektrisch leitenden Widerstandsdraht bzw. Heizdraht für eine Elektroschweißmuffe zu verwenden, dessen Isolationsschicht bei Raumtemperatur eine Durchschlagspannung von 50 bis 1000 V, bevorzugt 100 bis 1000 V und mehr bevorzugt 300 bis 800 V aufweist. Die Elektroschweißmuffe hat dabei den oben im Detail beschriebenen Aufbau und weist insbesondere eine Komponente aus einem thermoplastischen Material auf, wobei der Widerstandsdraht angeordnet ist, um die Komponente im Einsatz durch Stromfluss durch den Widerstandsdraht zumindest teilweise zu schmelzen.

Dies hat den Vorteil, dass gegenüber den nach dem Stand der Technik für Elektroschweißmuffen verwendeten Widerstandsdrähten eine effizientere Wärmeübertragung von dem Widerstandsdraht auf des thermoplastische Material der Elektroschweißmuffe erfolgen kann, weil die Isolationsschichten, die eine elektrische und thermische Isolation bereitstellen, dünner ausgebildet werden können.

Die Erfindung basiert auf der Erkenntnis, dass im Stand der Technik aufgrund einer technischen Fehlvorstellung Widerstandsdrähte mit Isolationsschichten mit sehr viel höheren Durschlagspannungen von zum Beispiel 2500 V verwendet wurden und dass dies tatsächlich nicht nur nicht notwendig, sondern nachteilig ist. Nach herkömmlicher Vorstellung wurden die hohen Durschlagspannungen mit der gewünschten und notwendigen thermischen Stabilität bzw. Temperaturfestigkeit gleichgesetzt und daher gezielt vorgesehen. Dabei wurde die Kombination von mehreren Besonderheiten von Elektroschweißmuffen übersehen. Zum einen werden diese typischerweise mit Spannungen von nur maximal 48 V und für typischerweise nur maximal 2 bis 15 Minuten betrieben, und zum anderen treten bei der Verlagerung der Windungen des Widerstandsdrahtes während des Aufschmelzens bzw. Erweichens des thermoplastischen Materials der Elektroschweißmuffe nur sehr geringe Kräfte zwischen sich berührenden benachbarten Windungen auf. Das liegt daran, dass im Unterschied zu beispielsweise Transformatorwicklungen bei Widerstandsdrähten für Elektroschweißmuffen die Windungen nicht mit einer hohen Packungsdichte vorgesehen werden bzw. vorgesehen werden müssen und dass sich die Windungen zwar im erweichten bzw. aufgeschmolzenen Material bewegen können, ohne dass allerdings große Kräfte auf sie ausgeübt werden.

Daher ist es möglich, Isolationsschichten mit den oben angegebenen deutlich niedrigeren Durchschlagspannungen zu verwenden und dennoch eine für die Verwendung bei Elektroschweißmuffen ausreichende thermische Stabilität bereitzustellen, was den Vorteil einer effizienteren Wärmeübertragung, schnelleren Erwärmung des thermoplastischen Materials der Elektroschweißmuffe und insgesamt besseren Energieausnutzung mit sich bringt.

In einer bevorzugten Ausführungsform hat die Isolationsschicht mindestens eine Isolierstoffklasse 250 (thermische Klasse 250 in °C) nach DIN EN 60085. Zum Beispiel kann die Isolationsschicht so ausgestaltet sein, dass sie bei einer Temperatur von 250 °C für mindestens zwei bis 15 Minuten und mehr bevorzugt mindestens zwei bis 10 Minuten elektrisch isolierend bleibt.

In einer bevorzugten Ausführungsform beträgt die Dicke der Isolationsschicht 5 bis 18 µm.

In einer bevorzugten Ausführungsform ist der Widerstandsdraht - bzw. ein elektrisch leitender, von der Isolationsschicht umgebender Kern des Widerstandsdrahts - aus Kupfer oder einer Kupferlegierung ausgebildet.

In einer bevorzugten Ausführungsform ist die Isolationsschicht eine Lackschicht oder Beschichtung, die zum Beispiel aus Polyesterimid bestehen oder dieses aufweisen kann.

Im Folgenden wird die Erfindung unter Bezugnahme auf die beigefügten Zeichnungen näher erläutert.
Figur 1 zeigt eine schematische Querschnittsansicht einer Elektroschweißmuffe, in die zwei Endabschnitte von Rohrelementen eingeschoben sind.
Figur 2 zeigt eine schematische Querschnittsansicht eines Widerstandsdrahtes der Elektroschweißmuffe der Figur 1.

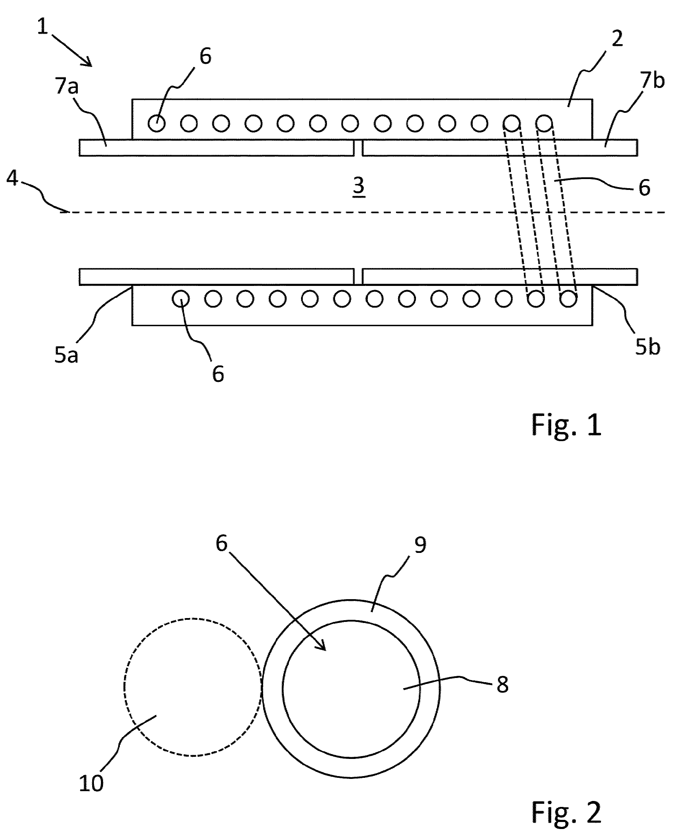

Die in Figur 1 schematisch im Querschnitt gezeigte Elektroschweißmuffe 1 weist einen rohrförmigen bzw. hohlzylindrischen Muffenkörper 2 aus, der aus einem thermoplastischen Kunststoffmaterial ausgebildet ist. Er definiert in seinem Inneren einen länglichen zylindrischen Hohlraum 3, der beispielsweise einen kreisförmigen, ovalen, quadratischen oder rechteckigen Querschnitt haben kann und im gezeigten Beispiel eine gerade zentrale Längsachse bzw. Mittelachse 4 definiert. Es ist aber auch möglich, den Hohlraum 3 und damit die Längsachse 4 gekrümmt vorzusehen. Der Muffenkörper 2 weist an zwei entlang der Längsachse 4 gegenüberliegenden Enden jeweils eine Öffnung 5a, 5b auf, durch die der Hohlraum 3 jeweils von außen zugänglich ist.

In das thermoplastische Material des Muffenkörpers 2 ist ein elektrisch leitender Widerstandsdraht bzw. Heizdraht 6 eingebettet, und zwar in der Weise, dass er die Längsachse 4 konzentrisch und wendel- bzw. helixförmig umläuft. Der Draht 6 erstreckt sich daher allgemein mit einer Vielzahl von Windungen, von denen nur die beiden rechten gestrichelt in der Querschnittsansicht angedeutet sind, entlang der Längsachse 4 und über im Wesentlichen die gesamte Länge des Muffenkörpers 2. Wenn der Widerstandsdraht 6 an eine externe Stromquelle angeschlossen und von einem elektrischen Strom durchflossen wird, erwärmt er sich aufgrund der ohmschen Verluste und überträgt sein Wärme auf das ihn umgebende thermoplastische Material des Muffenkörpers 2. Dieses kann auf diese Weise zumindest im Bereich der den Hohlraum 3 begrenzenden Wandung aufgeschmolzen werden.

Zum Verschweißen zweier Rohrabschnitte aus thermoplastischem Material werden ihre Endabschnitte 7a, 7b jeweils durch die gegenüberliegenden Öffnungen 5a bzw. 5b entlang der Längsachse 4 in den Hohlraum 3 eingeschoben. Zum Verschweißen der beiden Rohrabschnitt ist der Muffenkörper 2 so gewählt, dass die Außenseiten der Endabschnitte 7a, 7b vollumfänglich an der den Hohlraum 3 begrenzenden Innenfläche des Muffenkörpers 2 anliegen. Wenn das thermoplastische Material des Muffenkörpers 2 - und bevorzugt auch zumindest teilweise das angrenzende thermoplastische Material der Endabschnitte 7a, 7b - anschließend in der beschriebenen Weise aufgeschmolzen wird, entsteht jeweils eine stoffschlüssige Schweißverbindung zwischen jedem der beiden Endabschnitten 7a, 7b und dem Muffenkörper 2.

Die Windungen des Widerstandsdrahtes 6 sind relativ lose gepackt, so dass benachbarte Windungen voneinander beabstandet sind. Um jedoch zu verhindern, dass bei einem Kontakt benachbarter Windungen aufgrund einer relativen Verlagerung der Windungen im aufgeschmolzenen Material des Muffenkörpers 2 ein kürzerer Stromweg entsteht, der einen Teil des Verlaufs des Widerstandsdrahtes 6 überbrückt, ist der Widerstandsdraht 6, der in Figur 2 schematisch in einer detaillierteren Querschnittsansicht gezeigt ist und zum Beispiel aus Kupfer oder einer Kupferlegierung ausgebildet ist oder besteht, vollumfänglich von einer Schicht 9 aus einem elektrisch isolierenden Material umgeben, zum Beispiel Polyesterimid. Der Widerstandsdraht 6 ist somit Teil einer Anordnung, die den eigentlichen Widerstandsdraht 6 als Kern 8 und die diesen umgebende Isolationsschicht 9 aufweist. Es wäre auch möglich, diese gesamte Anordnung 8, 9 als Widerstandsdraht zu bezeichnen. Bei letzterer Definition des Begriffs "Widerstandsdraht" würde die Isolationsschicht zum Widerstandsdraht gehören. Die Isolationsschicht 9 weist eine Durchschlagspannung von 50 bis 1000 V bei einer Dicke von 5 bis 18 µm auf. Die Durchschlagspannung ist allgemein diejenige Gleichspannung zwischen dem Kern 8 und einem in Figur 2 gepunktet angedeuteten, mit der Isolationsschicht 9 in Kontakt stehend Probenkörper, bei der ein Stromfluss durch die Isolationsschicht 9 aufgrund eines elektrischen Durchschlags bzw. Spannungsdurchschlags auftritt.

## Patentansprüche

1. Verwendung eines mit einer elektrisch isolierenden Isolationsschicht (9) versehenen Widerstandsdrahts (6) für eine Elektroschweißmuffe (1), wobei die Elektroschweißmuffe (1) eine Komponente (2) aus einem thermoplastischen Material aufweist und der Widerstandsdraht (6) angeordnet ist, um die Komponente (2) im Einsatz durch Stromfluss durch den Widerstandsdraht (6) zumindest teilweise zu schmelzen, und wobei
die Durchschlagsspannung der Isolationsschicht (9) bei Raumtemperatur 50 bis 1000 V beträgt.

2. Verwendung nach Anspruch 1, bei der die Durchschlagsspannung der Isolationsschicht (9) bei Raumtemperatur 100 bis 1000 V beträgt.

3. Verwendung nach Anspruch 2, bei der die Durchschlagsspannung der Isolationsschicht (9) bei Raumtemperatur 300 bis 800 V beträgt.

4. Verwendung nach einem der vorhergehenden Ansprüche, bei der die Isolationsschicht (9) mindestens eine Isolierstoffklasse 250 nach DIN EN 60085 hat.

5. Verwendung nach einem der vorhergehenden Ansprüche, bei der die Dicke der Isolationsschicht (9) 5 bis 18 µm beträgt.

6. Verwendung nach einem der vorhergehenden Ansprüche, bei der der Widerstandsdraht (6) aus Kupfer oder einer Kupferlegierung ausgebildet ist.

7. Verwendung nach einem der vorhergehenden Ansprüche, bei der die Isolationsschicht (9) eine Lackschicht ist.

8. Verwendung nach Anspruch 7, bei der die Lackschicht aus Polyesterimid besteht.
